# EUROPÄISCHE PATENTANMELDUNG

(11) **EP 3 150 890 A1**
(43) Veröffentlichungstag der Anmeldung: **05.04.2017**
(21) Anmeldenummer: 15187316.3
(22) Anmeldetag: 29.09.2015
(51) Int. Cl.: F16L 5/02, F16L 5/04, H02G 3/22

(54) **LEITUNGSDURCHFÜHRUNG ZUM DURCHFÜHREN VON LEITUNGEN DURCH EIN BAUTEIL**

(71) Anmelder: HILTI Aktiengesellschaft, 9494 Schaan (LI)
(72) Erfinder: Schulz-Hanke, Wolfgang, 86836 Untermeitingen (DE); Münzenberger, Herbert, 65191 Wiesbaden (DE); Schulze, Peter, 86947 Weil (DE)
(74) Vertreter: Hilti Aktiengesellschaft Corporate Intellectual Property

(57) **Zusammenfassung**

Die Erfindung betrifft eine Leitungsdurchführung (1) zum Durchführen einer Leitung (4) durch ein Bauteil (2), insbesondere eine Wand oder eine Decke eines Gebäudes, umfassend:
- eine Hülse (5) zum gleitenden Aufnehmen einer durch die Durchgangsöffnung geführten Leitung (4);
- ein flexibles Verschlusselement (6) zum Ausfüllen eines Zwischenraums zwischen der Hülse (5) und einer Innenwand des Bauteils, wobei die Hülse (5) in das Verschlusselement (6) eingebettet ist.

## Beschreibung

### Technisches Gebiet

Die Erfindung betrifft eine Leitungsdurchführung zum Hindurchführen einer Leitung durch ein Bauteil, insbesondere durch eine Gebäudewand bzw. Gebäudedecke. Insbesondere betrifft die vorliegende Erfindung allgemein Brandschutzmaßnahmen für die Durchführung von Leitungen durch ein Bauteil.

### Technischer Hintergrund

In Gebäuden und Anlagen müssen Leitungen, die durch ein Bauteil, wie z.B. durch eine Wand oder eine Decke, geführt werden, Anforderungen für den Brandschutz genügen. So gehört es zu einer grundlegenden Anforderung, dass Brandgase oder sogar Feuer das Bauteil nicht durchdringen dürfen, d.h. in einem Gebäude nicht von einem Raum in einen nächsten gelangen dürfen.

Aus diesem Grund ist es üblich, bei Leitungsdurchführungen durch Wände der sich zwischen der Leitung und einer Innenwand einer Durchgangsöffnung bestehende Zwischenraum mit einem flexiblen und starren Verfüllmaterial zu verfüllen, wie zum Beispiel mit Mörtel, PU-Steinen, Acrylatdichtmittel, Mineralwolle, insbesondere in Kombination mit Sprühbeschichtungen, und dergleichen.

Im Brandfall können aufgrund einer Hitzentwicklung Spannungen entstehen, die starke mechanische Kräfte zwischen der Wand und der hindurchgeführten Leitung bewirken. Dadurch kann relativer Versatz zwischen der Leitung und der Wand auftreten. Insbesondere kann es auch bei Erdbeben zu erheblichen Verschiebungen zwischen der Leitung und der Wand kommen. Da die Leitung in der Regel mit dem Verfüllmaterial fest verbunden ist, kann sich das Verfüllmaterial durch die auftretenden Spannungen ablösen, reißen oder brechen. Insbesondere eine relative Verschiebung der Leitung senkrecht zur Wand kann zu einem teilweisen oder vollständigen Ablösen des Verfüllmaterials von der Leitung und/oder von der Durchgangsöffnung bzw. zu einem Aufreißen des Verfüllmaterials führen. Durch die dadurch entstehenden Risse und Spalten wird die geforderte Gasundurchlässigkeit beeinträchtigt, so dass Brandgase und Feuer die zuvor gasdichte Durchgangsöffnung überwinden können. Daher ist der bisherige Ansatz des einfachen Verfüllens des Zwischenraums zwischen der Leitung und der Innenwand der Durchgangsöffnung mit einem Verfüllmaterial nicht optimal.

Marktübliche Kabelboxen sehen vor, die Leitung entweder durch eine Kombination aus festem Kunststoff und Abdichtungsmaterial zu führen, wodurch jedoch die relative Beweglichkeit der Leitung erheblich eingeschränkt ist, so dass bei starken Erschütterungen die Beschädigung der Kabelbox nahezu unvermeidlich ist und die Gasdichtigkeit nicht mehr gewährleistet ist.

Weiterhin können intumeszierende Lamellen vorgesehen sein, die zwar eine verbesserte Beweglichkeit der durchgeführten Leitung sicherstellen, aber keine ausreichende Rauchgasdichtigkeit aufweisen.

Ein weiterer Ansatz ist beispielsweise aus der Druckschrift DE 10 2008 000 420 A1 bekannt, in der eine Leitungsdurchführung offenbart ist, die einen geschlossenen Durchführraum für eine Leitung aufweist. Im Gehäuse der Leitungsdurchführung sind eine Einlage aus intumeszierendem Material sowie mindestens ein Dichtelement aus einem elastischen Material vorgesehen, um eine Abdichtung im Brandfall zu erreichen.

Aus der Druckschrift DE 10 2006 000 184 A1 ist eine Leitungsdurchführung zum Durchführen von Leitungen durch ein Bauteil bekannt. Die Leitungsdurchführung weist ein Hüllrohr und ein Basisteil auf, das an dem ersten axialen Ende des Hüllrohres angebracht ist und einen eine Durchführung umgebenden Aufnahmeraum für ein Abschottmittel umfasst. An dem ersten axialen Ende des Hüllrohrs ist weiterhin ein ringförmiges membranartiges Dichtelement angeordnet. An dem zweiten axialen Ende des Hüllrohres ist ein weiteres membranartiges Dichtelement angeordnet, um die Leitungsdurchführung abzudichten.

Es ist eine Aufgabe der vorliegenden Erfindung, eine Leitungsdurchführung bereitzustellen, mit der eine Leitung durch ein Bauteil, wie beispielsweise eine Wand oder eine Decke, geführt werden kann, so dass diese für Rauchgase in einem Brandfall dicht ist. Weiterhin soll eine Toleranz gegenüber Erschütterungen und relativen Verschiebungen zwischen der Leitung und dem Bauteil gewährleistet sein, so dass auch nach einer relativen Verschiebung die Dichtigkeit der Leitungsdurchführung nicht beeinträchtigt ist.

### Offenbarung der Erfindung

Diese Aufgabe wird durch die Leitungsdurchführung gemäß Anspruch 1 sowie eine Leitungsdurchführungsanordnung gemäß dem nebengeordneten Anspruch gelöst.

Weitere Ausgestaltungen sind in den abhängigen Ansprüchen angegeben.

Im Rahmen der vorliegenden Erfindung verwendet, schließen die Singularformen "ein", "eine" und "einer" auch die entsprechenden Pluralformen ein, sofern der Zusammenhang nicht eindeutig auf etwas anderes schließen lässt. Somit soll zum Beispiel der Begriff "ein" "ein oder mehrere" oder "zumindest ein" bedeuten, sofern nicht anders angegeben.

Die Begriffe "aufweisen", "mit" und "haben" sollen einschließend sein und bedeuten, dass auch andere als die genannten Elemente gemeint sein können.

Gemäß einem ersten Aspekt ist eine Leitungsdurchführung zum Durchführen einer Leitung durch ein Bauteil, insbesondere eine Wand oder eine Decke eines Gebäudes, vorgesehen, umfassend:
- eine Hülse zum gleitenden Aufnehmen einer durch die Durchgangsöffnung geführten Leitung; und
- ein flexibles Verschlusselement zum Ausfüllen eines Zwischenraums zwischen der Hülse und einer Innenwand des Bauteils, wobei die Hülse in das Verschlusselement eingebettet ist.

Eine Idee der obigen Leitungsdurchführung besteht darin, eine durch die Durchgangsöffnung führende Leitung gleitend in einer festen Hülse zu führen, die selbst in einem flexiblen Verschlusselement in der Durchgangsöffnung des Bauteils fixiert ist. Somit wird bei einer relativen Bewegung der Leitung entlang ihrer axialen Erstreckungsrichtung keine Kraft auf das flexible Material des Verschlusselements, in dem die Hülse gelagert ist, ausgeübt. Kräfte, die in eine Richtung quer zur axialen Richtung der Leitung bzw. parallel zu einer Flächenrichtung des Bauteils verlaufen, können dagegen durch das flexible Material, das die Hülse umgibt, aufgenommen werden. Durch die Kombination der festen Hülse mit dem flexiblen Verschlusselement ist zum einen eine gasdichte Durchführung der Leitung durch das Bauteil möglich und es wird zum anderen verhindert, dass Relativbewegungen zwischen Leitung und Bauteil im Fall von Erschütterungen die Gasdichtigkeit beeinträchtigt.

Weiterhin kann die Hülse mit einer Gleiteinrichtung versehen sein, so dass die Leitung durch die Hülse gleitend und gasdicht geführt ist.

Gemäß einer Ausführungsform kann die Gleitreinrichtung eine Gleitfilmwicklung und/oder ein pastöses Gleitstoffe und/oder ein festes Gleitmaterial aufweisen, das gegebenenfalls mit mindestens einem Brandschutzadditiv versetzt ist und/oder brandschutzrelevant modifiziert wurde.

Es kann vorgesehen sein, dass die Hülse aus einem festen Material ausgebildet ist. Insbesondere kann die Hülse ein intumeszierendes Material enthalten. Dadurch wird erreicht, dass die Leitung im Brandfall durch das sich durch die Hitzeeinwirkung ausdehnende Material der Hülse abgedrückt wird. So kann die Gasdichtigkeit auch bei einem etwaigen Aufschmelzen der Leitung beibehalten werden.

Das Verschlusselement kann separat von der Hülse und insbesondere ein- oder mehrteilig ausgebildet sein

Alternativ kann das Verschlusselement mit der Hülse fest verbunden und dadurch als einstückiges Formteil vorgesehen sein.

Alternativ kann das Verschlusselement durch Spritzen eines sich verfestigenden Materials, insbesondere Schaummaterials, um die Hülse ausgebildet sein.

Weiterhin können das Verschlusselement und die Hülse entlang ihrer axialen Erstreckungsrichtungen geschlitzt sein. Dies ermöglicht eine einfache Montage durch Herumlegen um die Leitung, so dass diese in der Hülse aufgenommen wird, und anschließendes Hineinschieben der Leitungsdurchführung in die Durchgangsöffnung des Bauteils entlang der Leitung.

Gemäß einer Ausführungsform kann das Material des Verschlusselements eine höhere Elastizität aufweisen als das Material der Hülse.

Gemäß einem weiteren Aspekt ist eine Leitungsdurchführungsanordnung vorgesehen, umfassend:
- die obige Leitungsdurchführung; und
- eine Leitung,
wobei die Hülse einen Innenquerschnitt aufweist, der im Wesentlichen dem Querschnitt der Leitung entspricht.

Die Hülse kann eine Länge aufweisen, die der Erstreckung der Durchgangsöffnung durch die Wand entspricht.

Die Hülse kann im Wesentlichen mittig bzw. in einem zentralen Bereich des Verschlusselements und/oder mittig bzw. in einem zentralen Bereich der Durchgangsöffnung angeordnet sein.

### Kurzbeschreibung der Zeichnungen

Ausführungsformen werden nachfolgend anhand der beigefügten Zeichnungen näher erläutert. Es zeigen:

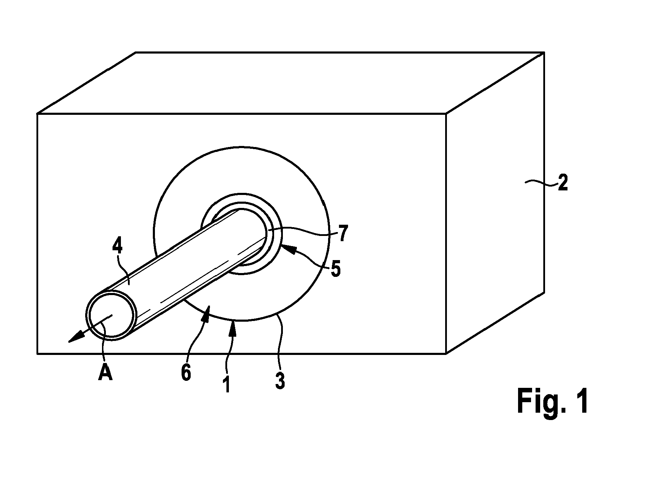

- Figur 1: eine schematische Darstellung einer Leitungsdurchführungsanordnung mit einer Leitungsdurchführung durch eine Wand.

### Beschreibung von Ausführungsformen

In Figur 1 ist schematisch eine Leitungsdurchführung 1 durch eine Wand 2 (oder eines sonstigen Bauteils) dargestellt. Die Wand 2 weist eine Durchgangsöffnung 3 auf. Durch die Durchgangsöffnung 3 ist eine Leitung 4 geführt. Die Leitung 3 kann ein Kabel, ein Kabelrohr, eine Rohrleitung, eine Kabeltrasse, ein Lüftungsrohr, eine Lüftungsklappe, oder vergleichbares sein.

Die Durchgangsöffnung 3 weist im vorliegenden Ausführungsbeispiel einen runden Querschnitt auf. Es können jedoch auch Durchgangsöffnungen mit davon abweichenden Querschnitten vorgesehen werden.

Die Leitungsdurchführung 1 umfasst eine feste Hülse 5, in der die Leitung 4 geführt wird. Die Hülse 5 hat eine Länge, die der Breite der Durchgangsöffnung 3 durch die Wand 2 entsprechen kann.

Die Hülse 5 weist im dargestellten Ausführungsbeispiel einen runden Querschnitt auf, der im Wesentlichen dem Querschnitt der Leitung 4 entspricht. Die Hülse 5 kann korrespondierend zum Querschnitt der Leitung 4 auch andere als runde Querschnitte, wie z.B. rechteckige Querschnitte, sechseckige Querschnitte und dergleichen aufweisen.

Die Hülse 5 ist an ihrer inneren Mantelfläche gleitfähig ausgebildet. Die Gleitfähigkeit zwischen der Hülse 5 und der Leitung 4 kann durch eine Gleicheinrichtung 7 in Form einer Beschichtung mit einem gleitfähigen Material, wie einem pastösen Gleitstoff, z.B. Schmierstoff oder Gel, oder einem festen Gleitmaterial, wie z.B. Gleitband oder PTFE, erreicht werden.

Die Hülse 5 ist aus einem festen, d.h. im Wesentlichen nicht elastischen Material ausgebildet, wobei das Material vorzugsweise intumeszierend sein kann, um im Brandfall durch eine Volumenvergrößerung die Leitung 4 zusammenzudrücken oder zu verdrängen und damit z.B. im Fall eines Ausschmelzens der Leitung 4 für eine zusätzliche Gasdichtigkeit zu sorgen.

Die Hülse 5 ist in einem Verschlusselement 6 eingebettet, das die Durchgangsöffnung 3 vollständig verschließt, so dass im Brandfall ein Durchtritt von Rauchgasen unterbunden wird. Das Verschlusselement 6 weist dazu eine Form auf, die der Form des Zwischenraums zwischen der Hülse 5 und der Innenfläche der Durchgangsöffnung 3 entspricht.

Das Verschlusselement 6 kann als eigenständiges Formteil vorgesehen sein und ein- oder mehrteilig ausgebildet sein, um eine einfache Montage zu ermöglichen. Ist das Verschlusselement 6 einstückig ausgebildet, so kann es, gemeinsam mit der Hülse 5, entlang der axialen Richtung geschlitzt ausgebildet sein, um eine Montage durch Aufsetzen auf die Leitung 4 und Hineinschieben in die Durchgangsöffnung 3 zu ermöglichen.

Das Verschlusselement 6 kann alternativ auch durch Spritzen eines sich verfestigenden Materials in den Bereich zwischen der Hülse 5 und der Innenwand der Durchgangsöffnung 3 ausgebildet werden.

Gemäß einer weiteren Alternative kann das Verschlusselement 6 auch mit der Hülse 5 fest verbunden als einstückiges Formteil vorgesehen sein. In diesem Fall kann dieses Formteil entlang der axialen Richtung geschlitzt sein, um eine Montage durch Aufsetzen auf die Leitung 4 und Hineinschieben in die Durchgangsöffnung 3 zu ermöglichen.

Die Hülse 5 ist im Wesentlichen mittig bzw. in einem zentralen Bereich des Verschlusselements 6 angeordnet, so dass ein ausreichender Bewegungsspielraum der mit der Hülse 5 versehenen Leitung 4 in der Durchgangsöffnung 3 verbleibt.

Das Verschlusselement 6 ist aus einem flexiblen bzw. elastischen Material ausgebildet. Insbesondere weist das Material des Verschlusselements 6 eine höhere Elastizität auf als das Material der Hülse 5.

Je nach Ausdehnungsfähigkeit der aus intumeszierendem Material ausgebildeten Hülse 5 kann das Verschlusselement 6 frei von intumeszierendem Material ausgebildet sein. Im Brandfall kann sich dann die Hülse 5 so weit ausdehnen, dass die Durchgangsöffnung 3 vollständig durch das Material der sich ausdehnenden Hülse 5 verschlossen wird und dabei die Leitung 4 und das Material des Verschlusselements 6 vollständig verdrängt wird.

Das Material des Verschlusselements 6 kann ein Schaummaterial sein, das mit einem intumeszierenden Material versetzt, getränkt oder beschichtet ist, damit im Brandfall eine Gasdichtigkeit auch bei einer aufgeschmolzenen Leitung 4 erreicht wird.

Durch die Gleitfähigkeit zwischen Hülse 5 und der Leitung 4 können relative Bewegungen zwischen der Leitung 4 und dem Bauteil 1 in axialer Richtung der Leitung 4, die im Idealfall einer Richtung senkrecht zur Flächenrichtung des Querschnitts entspricht, aufgenommen werden, so dass dadurch keine Kräfte auf das Material des Verschlusselements 6 wirken.

Durch die flexible Ausbildung des Verschlusselements 6 können Kräfte und relative Bewegungen der Leitung 4 quer zur Erstreckungsrichtung der Leitung 4 durch das Verschlusselements 6 aufgenommen werden, ohne dass eine Beschädigung auftritt, die zu einer Gasundichtigkeit führen könnte.

## Patentansprüche

1. Leitungsdurchführung (1) zum Durchführen einer Leitung (4) durch ein Bauteil (2), insbesondere eine Wand oder eine Decke eines Gebäudes, umfassend:
- eine Hülse (5) zum gleitenden Aufnehmen einer durch die Durchgangsöffnung (3) geführten Leitung (4);
- ein flexibles Verschlusselement (6) zum Ausfüllen eines Zwischenraums zwischen der Hülse (5) und einer Innenwand des Bauteils (2), wobei die Hülse (5) in das Verschlusselement (6) eingebettet ist.

2. Leitungsdurchführung (1) nach Anspruch 1, wobei die Hülse (5) mit einer Gleiteinrichtung (7) versehen ist, so dass die Leitung (4) durch die Hülse (5) gleitend und gasdicht geführt ist.

3. Leitungsdurchführung (1) nach Anspruch 2, wobei die Gleitreinrichtung (7) eine Gleitfilmwicklung und/oder einen pastösen Gleitstoff und/oder ein festes Gleitmaterial aufweist.

4. Leitungsdurchführung (1) nach einem der Ansprüche 1 bis 3, wobei die Hülse (5) aus einem festen, nicht flexiblen Material ausgebildet ist.

5. Leitungsdurchführung (1) nach Anspruch 2, wobei die Hülse (5) ein intumeszierendes Material enthält.

6. Leitungsdurchführung (1) nach einem der Ansprüche 1 bis 5, wobei das Verschlusselement (6) separat von der Hülse (5) und insbesondere ein- oder mehrteilig ausgebildet ist

7. Leitungsdurchführung (1) nach einem der Ansprüche 1 bis 5, wobei das Verschlusselement (6) mit der Hülse (5) fest verbunden und dadurch als einstückiges Formteil vorgesehen ist.

8. Leitungsdurchführung (1) nach einem der Ansprüche 1 bis 5, wobei das Verschlusselement (6) durch Spritzen eines sich verfestigenden Materials, insbesondere Schaummaterials, um die Hülse (5) ausgebildet ist.

9. Leitungsdurchführung (1) nach einem der Ansprüche 1 bis 8, wobei zumindest das Verschlusselement (6) entlang seiner axialen Erstreckungsrichtung geschlitzt ist.

10. Leitungsdurchführung (1) nach einem der Ansprüche 1 bis 9, wobei das Material des Verschlusselements (6) eine höhere Elastizität aufweist als das Material der Hülse (5).

11. Leitungsdurchführungsanordnung umfassend:
- eine Leitungsdurchführung (1) nach einem der Ansprüche 1 bis 10;
- eine Leitung (4),
wobei die Hülse (5) einen Innenquerschnitt aufweist, der im Wesentlichen dem Querschnitt der Leitung (4) entspricht.

12. Leitungsdurchführungsanordnung nach Anspruch 11, wobei ein Bauteil (2) mit einer Durchgangsöffnung (3) vorgesehen ist

13. Leitungsdurchführungsanordnung nach Anspruch 12, wobei die Hülse (5) eine Länge aufweist, die der Erstreckung der Durchgangsöffnung (3) durch die Wand (2) entspricht.

14. Leitungsdurchführungsanordnung nach einem der Ansprüche 11 bis 13, wobei die Hülse (5) im Wesentlichen mittig bzw. in einem zentralen Bereich des Verschlusselements (6) und/oder mittig bzw. in einem zentralen Bereich der Durchgangsöffnung (3) angeordnet ist.
